# EUROPÄISCHE PATENTSCHRIFT

(11) **EP 2 514 193 B1**
(45) Veröffentlichungstag und Bekanntmachung des Hinweises auf die Patenterteilung: **19.11.2014**
(21) Anmeldenummer: 10795224.4
(22) Anmeldetag: 08.12.2010
(51) Int. Cl.: G06T 11/00

(54) **VERFAHREN ZUR VISUALISIERUNG VON ORTSAUFGELÖSTEN MESSERGEBNISSEN UND KORRESPONDIERENDE MESSANORDNUNG**
METHOD FOR VISUALISING SPATIALLY-RESOLVED MEASUREMENT RESULTS AND CORRESPONDING MEASURING ARRANGEMENT
PROCÉDÉ DE VISUALISATION DE RÉSULTATS DE MESURE À RÉSOLUTION SPATIALE ET DISPOSITIF DE MESURE CORRESPONDANT

(30) Priorität: 26.02.2010 DE 102010009476; 15.12.2009 DE 102009058324
(43) Veröffentlichungstag der Anmeldung: 24.10.2012
(73) Patentinhaber: Testo AG, 79853 Lenzkirch (DE)
(72) Erfinder: SCHNELL, Martin, 87484 Nesselwang (DE)
(74) Vertreter: Kunst, Manuel Nikolaus Johannes
(86) Internationale Anmeldenummer: PCT/EP2010/007465
(87) Internationale Veröffentlichungsnummer: WO 2011/082754

(56) Entgegenhaltungen:
- EP-A1- 2 074 933
- DE-A1-102005 019 143
- US-A1- 2009 289 950

## Beschreibung

Die Erfindung betrifft ein Verfahren zur Visualisierung von ortsaufgelösten Messergebnissen, wobei mit einer Messeinheit ein ortsaufgelösten Messergebnis von einem Objekt erstellt wird und aus dem ortsaufgelösten Messergebnis ein Falschfarbenbild gewonnen wird.

Die Erfindung betrifft weiter eine Messanordnung, umfassend eine Messeinheit, die zur Erfassung eines ortsaufgelösten Messergebnisses in einem ersten Raumwinkelbereich eingerichtet ist, eine Umwandlungs- und Datenverarbeitungseinheit, die zur Gewinnung eines Falschfarbenbildes aus dem ortsaufgelösten Messergebnisses eingerichtet ist, und eine Darstellungseinheit zur Ausgabe des Falschfarbenbildes.

Unter einem ortsaufgelösten Messergebnis von einem Objekt wird hierbei jede zweidimensionale Anordnung von Messwerten verstanden, wobei durch die Anordnung eine Zuordnung der einzelnen Messwerte zu unterschiedlichen räumlichen Bereichen des Objektes beschrieben ist. Beispiele für ortsaufgelöste Messergebnisse sind Wärmebilder, Röntgenbilder, Schallbilder.

Es ist bekannt, derartige Messergebnisse aus berührungslosen Messungen aus der Distanz aufzunehmen.

Oft ist es wünschenswert, die gleichzeitige oder fastgleichzeitige Visualisierung der Messergebnisse auf möglichst deutliche und offensichtliche Art und Weise bereitzustellen. Die bisherige Vorgehensweise ist die, dass mit dem Messgerät die Eigenschaft gemessen und in ein Falschfarbenbild umgewandelt wird, welches dann in der Regel auf einem kleinen Display angezeigt oder gespeichert wird. Der Anwender ist also gezwungen, seine Aufmerksamkeit abwechselnd auf das Display und wieder auf das reale Objekt richten, und er muss versuchen, das Bild auf dem Display mit dem realen Objekt gedanklich in Übereinstimmung zu bringen.

Unter einem Falschfarbenbild wird hierbei jede zweidimensionale Darstellung eines ortsaufgelösten Messergebnisses verstanden, bei welcher in einer Farb- oder Helligkeitscodierung den einzelnen Messwerten jeweils ein Farb- und/oder Helligkeitswert zugewiesen ist.

Es gibt viele Eigenschaften von Objekten, die nicht sichtbar sind. Eine solche Eigenschaft ist die Oberflächentemperatur beziehungsweise die Schwarzkörperstrahlung, die nach dem Planckschen Gesetz von jedem Körper mit einer endlichen Temperatur ausgeht. Als Thermografie bezeichnet man die berührungslose Messung der Oberflächentemperatur und die Umwandlung der Messung in ein ortsaufgelöstes Bild, welches typischerweise in einer Falschfarbendarstellung auf einem Anzeigegerät (Display oder Bildschirm) angezeigt wird. Eine häufig verwendete (aber willkürliche) Farbcodierung ist rot und gelb für warme und heiße Bereiche sowie blau und schwarz für kalte Bereiche.

Thermografische Messungen haben viele Anwendungsmöglichkeiten; einige Beispiele:
- Gebäudeuntersuchungen zur Erkennung von Fehlstellen in der Wärmedämmung
- bei der Lecksuche von Wasserleitungen, die innerhalb des Fußbodens oder einer Wand verlaufen und daher nicht sichtbar und zugänglich sind
- bei Gebäuden zum Nachweis von Schimmelpilzbefall
- Messungen an Anlagen und Maschinen, um Fehler wie Lecks oder schlechte mechanische oder elektrische Verbindungen zu finden (wenn diese sich durch einen Temperaturunterschied bemerkbar machen)
- Messungen an elektronischen Schaltungen, um Fehlern wie schlechten Kontakten oder nicht funktionierenden Bauteilen auf die Spur zu kommen
- in der Forensik, um Restwärme zu sehen, an Stellen wo eine Person anwesend war
- medizinische Untersuchungen, um Entzündungsherde zu erkennen; dies wird gerne auch im veterinärmedizinischen Bereich verwendet.

Die gemessenen Temperaturunterschiede sind bei diesen Anwendungen oft nur im Bereich von einigen zehntel Grad, was von den Kameras gut erfasst werden kann.

Typischerweise werden hierbei thermografische Bilder mit einer geeigneten Kamera oder einem Scanner aufgenommen und anschließend in einem Bericht verarbeitet, in dem die mit der Thermografie-Kamera aufgezeichneten Bilder abgedruckt werden und entsprechenden Erläuterungen versehen werden. Ein solcher Bericht hat stets den Nachteil, dass es schwierig ist, sich anhand der meist relativ niedrig aufgelösten Bilder zurecht zu finden. Weiterhin hat diese Arbeitsweise den Nachteil, dass zwischen der Messung mittels der thermografischen Kamera und der Fertigstellung des Berichts Zeit vergeht: es kann Tage oder Wochen dauern, bis ein Bericht fertig ist. Damit steigt das Risiko von falschen Zuordnungen der Bilder zu den betrachteten Objekten. Insbesondere ist die Erstellung eines Berichtes bei einer dringenden und zeitkritischen Messung zur Fehler- oder Lecksuche beispielsweise an einem Wasserrohr oder Heizungsrohr mit einem Rohrbruch innerhalb einer Wand nicht geeignet, da weitere Schäden entstehen während der Bericht erstellt wird. Für den Besitzer des Gebäudes und auch für den Handwerker, der das Problem beheben soll ist es wichtig und hilfreich, die Stelle möglichst schnell und direkt zu kennen um das Problem rasch und gezielt beheben zu können und dabei möglichst wenig zusätzliche Schäden beispielsweise durch das Aufreißen von größeren Wandbereichen zu verursachen. Bei gedruckten Bildern in einem Bericht ist es außerdem schwierig, die genaue (Schad-) Stelle aufgrund der oft niedrig aufgelösten Bilder aus dem Bericht wieder vor Ort am Objekt zu lokalisieren.

Die geringe Auflösung thermografischer Bilder kann auch als ein systemtypischer Nachteil von thermografischen Kameras an sich gesehen werden.

Ein weiterer Anwendungsbereich ist in der Forensik oder der Kriminaltechnik denkbar, wobei jetzt auch andere Wellenlängenbereiche betrachtet werden: im Bereich von ultravioletter Strahlung (Wellenlänge kleiner als etwa 400nm) oder von Strahlung im nahen Infrarotbereich (Wellenlänge größer als etwa 700nm bis 1400nm). Bei forensischen Analysen eines Tatortes durch Ermittlungs- und Strafverfolgungsbehörden werden nicht sichtbare Spuren gesucht und die genannten Wellenlängenbereiche können wichtige Aufschlüsse liefern. Es gibt Sensoren und Kameras, die Bilder in diesen nicht sichtbaren Wellenlängenbereichen aufnehmen können und so beispielsweise Blutspuren erkennbar machen.

Da die hierbei betrachteten Objekte im Gegensatz zur obigen thermografischen Anwendung typischerweise keine aktiven Emitter sind, muss man gegebenenfalls mit einer zusätzlichen, geeigneten Strahlungsquelle arbeiten und den betrachteten Raumwinkelbereich entsprechend ausleuchten; gemessen wird dann also das reflektierte Licht.

Der derzeitige Stand der Technik ist hierbei wiederum eine ähnliche Arbeitsweise wie bei der Thermografie: die Bilder können aufgenommen und gespeichert werden und dann mit zeitlicher Verzögerung in Berichte eingearbeitet werden. Für die gerichtliche Verhandlung ist dies sicherlich notwendig und auch ausreichend. Für laufende Ermittlungsarbeiten ist die zeitliche Verzögerung jedoch ein erheblicher Nachteil, da solche Spuren möglichst klar, direkt und sofort sichtbar sein sollten.

Der Nachteil bei dieser Vorgehensweise liegt darin, dass relativ viel Zeit (Stunden / Tage oder Wochen) zwischen der Messung und dem Vorliegen des Reports und damit zwischen Report und möglichen (Präventions-) Maßnahmen liegt.

Weiterhin ist von Nachteil, dass eine Darstellung auf einem kleinen Display nicht unmittelbar und leicht für eine Mehrzahl von Personen wie beispielsweise einem Ermittlerteam erkennbar ist. Außerdem ist die Darstellung indirekt und das auf dem Display erkennbare Bild muss mit den realen Objekten gedanklich zur Deckung gebracht werden.

Ein weiterer Nachteil ist, dass solche Berichte beispielsweise für einen Handwerker, der eine Reparatur an einer bestimmten Stelle vornehmen soll, unter Umständen nicht leicht zu verstehen sind und somit ist die Durchführung der Reparatur erschwert, da nicht klar ist, wo genau welche Aufnahme entstanden ist: bei Detailaufnahmen von Innenräumen wie beispielsweise Wänden, Zimmerecken, Heizkörpern und Rollladenkästen ist durchaus die Gefahr von späteren Verwechslungen gegeben.

Selbst bei der Untersuchung direkt vor Ort mit einer entsprechenden Kamera sind die Bilder noch indirekt, da sie nur auf einem meist kleinen Bildschirm zu sehen sind und es geht ja gerade um gemessene Parameter, die nicht sichtbar sind. Wer schon mal mit einem entsprechenden Gerät gearbeitet hat, weiß, dass es durchaus schwierig sein kann, genau die richtige Stelle an beispielsweise einem Objekt wie einer Wand zu finden, unter der man laut den angezeigten Messergebnissen auf dem Bildschirm eine Schadstelle wie ein gebrochenes Wasserrohr vermutet.

Zum Stand der Technik gehören ferner die Darstellungsgeräte, welche beim erfindungsgemäßen Verfahren zum Einsatz kommen; sie zeichnen sich durch mindestens folgende Eigenschaften aus:
- das Darstellungsgerät hat einen geeigneten Eingang für das Signal welches vom Messgerät gemessen wurde und welches die gemessene Eigenschaft in dem Raumwinkel beispielsweise als Falschfarbenbild ortsaufgelöst darstellt
- das Darstellungsgerät projiziert im sichtbaren Wellenlängenbereich des Lichts (also im Wellenlängenbereich von etwa 400nm bis 700nm) ein ortsaufgelöstes Bild in einen bestimmten Raumwinkelbereich.

Beispiele sind Beamer oder Projektoren, wie man sie auch für die vergrößerte Darstellung von Bilddaten wie beispielsweise Präsentationen oder auch von Filmen mittels Computern verwendet und die in großer Zahl und in zahlreichen Ausführungen kommerziell verfügbar sind. Ein Problem mit Geräten, welche eine klassische, nicht-kohärente Lichtquelle wie beispielsweise eine Halogenlampe verwenden, ist, dass man bei der anvisierten Anwendung im Allgemeinen nicht davon ausgehen kann, dass eine ebene Fläche untersucht wird. Nach der klassischen Optik haben solche Geräte prinzipbedingt zumeist nur einen kleinen Abstandsbereich, in dem eine scharfe Bilddarstellung möglich ist (geringe Schärfentiefe) und somit hat man in einer Anwendung mit beliebigem Betrachtungswinkel einer Ebene oder bei der Untersuchung von nicht-ebenen Objekten das Problem, dass meistens Teile des Bildes unscharf sind.

Eine prinzipiell bessere Möglichkeit zur Darstellung sind daher laserbasierte Geräte, die es als große Filmprojektoren oder als miniaturisierte Projektoren zur Anwendung in mobilen elektronischen Geräten wie beispielsweise Mobiltelefonen vorgesehen sind und auch bereits in kleinen Stückzahlen verfügbar sind (Stand Dezember 2009). Durch die Eigenschaft des Laserstrahls der sehr geringen Strahlaufweitung ist eine scharfe Darstellung unabhängig von der Projektionsdistanz gegeben.

Dies ist insbesondere dann von Vorteil, wenn die Anwendung im Sinne der Erfindung dynamisch erfolgt und der betrachtete Raumwinkelbereich und der Ort und die räumliche Orientierung der kombinierten Messung und Darstellung durch den Anwender rasch verändert wird.

Weiterhin sind die laserbasierten Beamer besonders klein und leicht und sie können beispielsweise mit Batterien betrieben werden, was die Energieversorgung bei erfindungsgemäßer Verwendung in vorteilhafter Weise erleichtert.

Der Erfindung liegt die Aufgabe zugrunde, ein Verfahren zu finden, welches es ermöglicht, eine für das menschliche Auge nicht sichtbare Eigenschaft möglichst unmittelbar und direkt sichtbar zu machen.

Aus der DE 10 2005 019 143 A1 ist ein kombiniertes diagnose- und therapieunterstützendes System bekannt, welches zumindest eine Lichtquelle, ein Bilderfassungssystem zur Erfassung von Bildinformation und ein Bildverarbeitungssystem zum Verarbeiten der durch das Bilderfassungssystem aufgenommenen Bildinformation, um ein Signal zu erzeugen, aufweist. Das diagnose- und therapieunterstützendes System zeichnet sich dadurch aus, dass es ferner ein Projektionssystem aufweist, mit dem das durch das Bildverarbeitungssystem erzeugte Signal zumindest zum Teil lagerichtig zu einem durch das Bildverarbeitungssystem erfassten Objekt in einen Operationsbereich projizierbar ist.

Aus der EP 2 074 933 A1 ist ein Verfahren zur Analyse und Bearbeitung von Fluoreszenzbildern bekannt, bei welchem das von Tumorgewebe in einem beleuchteten Operationsbereich ausgestrahlte fluoreszierende Licht von einer Bilddetektionseinrichtung detektiert und an ein Bildverarbeitungssystem weitergeleitet wird. Nach Bestimmung einer Maximalintensität bestimmt das Bildverarbeitungssystem einen Schwellwert als vorgegebenen Bruchteil der Maximalintensität. Mit Hilfe morphologischer Basisoperationen der Bildbearbeitung werden Grenzintensitätslinien, welche Tumorgewebe mit Intensitäten oberhalb des Schwellenwertes und Normalgewebe mit Intensitäten unterhalb des Schwellenwertes trennen, generiert und in einem Linienprofilbild dargestellt, wobei das Linienprofilbild dem Fluoreszenzbild an einem Bildschirm überlagert werden kann.

Aus der US 2009/0289950 A1 sind ein Projektor, ein Bildprojektionsverfahren und ein den Projektor verwendendes head-up-Anzeigegerät bekannt, wobei ein Projektor ein Bild, welches zu einem ursprünglichen Bild korrespondiert, auf ein Projektionsobjekt durch Scannen des Projektionsobjekts mit einem Lichtstrahl projiziert.

Zur Lösung der Aufgabe sind erfindungsgemäß bei einem Verfahren der eingangs beschriebenen Art die Merkmale des Anspruchs 1 vorgesehen. Insbesondere wird somit vorgeschlagen, dass das Falschfarbenbild mit einer Darstellungseinheit auf das Objekt projiziert wird.

Durch die Projektion des Falschfarbenbilds auf das untersuchte Objekt ergibt sich die Möglichkeit, das von einer geeigneten Messeinheit - wie beispielsweise von einer thermografischen Kamera oder von einer Kamera, die für den ultravioletten oder den nahinfraroten Bereich ausgelegt ist, oder von einem anderen Messgerät, welches eine nicht direkt sichtbare jedoch ortsaufgelöst messbare Eigenschaft von Objekten erfasst, - gemessene ortsaufgelöste Messergebnis möglichst unmittelbar und direkt sichtbar zu machen. Durch ein solches Verfahren kann daher die nicht sichtbare Eigenschaft mit möglichst geringer zeitlicher Verzögerung und dynamisch visualisiert werden, was Anwendern des Verfahrens die Arbeit erheblich erleichtert oder neue Arbeitsweisen ermöglicht.

Für den Anwender des erfindungsgemäßen Verfahrens ergibt sich somit der Vorteil, dass die gemessene Eigenschaft unmittelbar sichtbar gemacht wird, was der Anschaulichkeit dient und was je nach Anwendung schnellere und genauere Reaktionen erlaubt. Die Erfindung kann beispielsweise dazu verwendet werden, um verborgene Schadstellen an Anlagen oder in Gebäuden einfacher zu lokalisieren und so gezielt zu beheben. Eine weitere Anwendungsmöglichkeit ist im Bereich der kriminaltechnischen Untersuchung, wenn Objekteigenschaften gesucht werden, die im sichtbaren Bereich nicht erkennbar sind; auch hier ist eine deutliche und möglichst offensichtliche Visualisierung wichtig und wünschenswert.

Wirtschaftliche Anwendungsmöglichkeiten sind nach der Definition der technischen Aufgabe gegeben, sei es durch das Potential zur Kosteneinsparung durch leichtere, schnellere und bessere Fehlersuche oder in der Verbesserung der Möglichkeiten beispielsweise bei forensischen Analysen.

Basierend auf dem erfindungsgemäßen Verfahren lässt sich ein Gerät konstruieren, mit dem das Verfahren in einfacher Weise angewendet werden kann; ein solches Gerät ist kommerziell herstellbar und stellt somit eine direkte wirtschaftliche Anwendung in Form von Herstellung und Verkauf entsprechender Geräte dar.

Das erfindungsgemäße Verfahren zur Visualisierung ist jedoch nicht auf die beschriebenen und kommerziell verfügbaren Messgeräte (thermografische Kamera und UV-/IR-Kamera) beschränkt. Prinzipiell kann das Verfahren mit allen heute verfügbaren sowie zukünftigen Messgeräten kombiniert werden, die mindestens folgende Eigenschaften haben:
- die zu messende Größe wird aus der Distanz erfasst
- die Messung ist ortsaufgelöst und deckt einen Raumwinkelbereich ab
- der Abstand zu der Messgröße ist ungefähr im Bereich von einigen Zentimetern bis hin zu einigen Kilometern (die Reichweiten des Darstellungsgerätes oder des Messgerätes sind limitierend)
- die Messdaten müssen in übertrag- und verarbeitbarer Form wie beispielsweise einem geeignet codierten, elektrischen Signal zur Verfügung stehen; vorteilhafterweise in zeitlich immer wieder aktualisierter Form wie beispielsweise durch ein Videosignal

Es wird somit erfindungsgemäß ein Verfahren vorgeschlagen zur Visualisierung von ortsaufgelösten Messergebnissen einer nicht unmittelbar für das menschliche Auge sichtbaren Eigenschaft, welche zunächst mit einer geeigneten Messeinheit 1, beispielsweise mit einem Messgerät, einer Messanordnung 8 in einem Raumwinkelbereich R1 aus der Distanz erfasst wird und dann nach möglicher Zwischenspeicherung und Umwandlung oder automatisierter datentechnischer Bearbeitung der Messdaten mittels einer Umwandlungs- und Datenverarbeitungseinheit 2 der Messanordnung 8 zur Umformung in ein Falschfarbenbild mit frei wählbarer Farb- oder Helligkeitscodierung wird dieses Falschfarbenbild weiter an eine Darstellungseinheit 3 der Messanordnung 8, wie beispielsweise einen Projektor oder einem Beamer oder einer laserbasierten Projektionseinheit, übertragen und dann möglichst zeitnah mit der Messung als Abbildung der umgeformten Messwerte im für das menschliche Auge sichtbaren Wellenlängenbereich unmittelbar in den Raumwinkelbereich R3 projiziert, so dass das betrachtete Objekt farbig beleuchtet wird, wobei die lokale Farbe oder die Helligkeit durch die Messwerte bestimmt ist und auf diese Weise die Messergebnisse unmittelbar visualisiert werden, wobei wichtig ist, dass die Raumwinkelbereiche R1 und R3 vorteilhafterweise möglichst genau übereinstimmen und somit der gemeinsame Raumwinkelbereich R2, in welchem die Raumwinkelbereiche R1 und R3 überlappen, möglichst groß ist.

Um die möglichst genaue Übereinstimmung der Raumwinkelbereiche R1 und R3 zu erreichen, ist es vorteilhaft, die Messeinheit 1 und die Darstellungseinheit 3, beispielsweise ein Darstellungsgerät, in räumlich möglichst geringer Distanz anzuordnen, um eine störende Parallaxe zu vermeiden; ferner sollten die den Raumwinkel definierenden Öffnungswinkel der Messeinheit 1 und der Darstellungseinheit 3 möglichst genau aufeinander abgestimmt sein.

Ein Beispiel für eine solche Eigenschaft ist die Oberflächentemperatur, welche sich beispielsweise durch eine thermografische Kamera berührungslos mittels der nicht sichtbaren Wärmestrahlung (Infrarotstrahlung, häufig im Wellenlängenbereich von 8 bis 12µm) messen lässt. Vorteilhafterweise kann noch das Signal einer Kameraeinheit 4 für den sichtbaren Bereich bei der Bestimmung des Falschfarbenbildes durch die Umwandlungs- und Datenverarbeitungseinheit 2 hinzugezogen werden, um die optischen Eigenschaften der betrachteten Objekte im sichtbaren Bereich zu berücksichtigen und zu kompensieren.

Bei den dargestellten Messanordnungen 8 symbolisieren die Verbindungslinien zwischen den Komponenten einen Datenfluss bei der Messanordnung 8.

Weitere Beispiele sind ultraviolette oder nahinfrarote Strahlung sowie prinzipiell andere elektromagnetische Strahlung wie Radiowellen, Mikrowellen oder auch radioaktive Strahlung oder auch Schallwellen, sofern er für diese ein geeignetes Messgerät zur ortsaufgelösten Messung aus der Distanz gibt.

Gemessen wird entweder wie im Falle des Beispiels der thermografischen Kamera die Emission von Wärmestrahlung oder wie im Beispiel des nahinfraroten Lichts oder des ultravioletten Lichts die Reflexion von vorhandener Strahlung oder alternativ die Reflexion bei Bestrahlung des Objekts mit einer geeigneten Lichtquelle.

Entscheidend ist, dass man die Messung ortsaufgelöst über einen gewissen Raumwinkelbereich aus der Distanz durchführen kann, so dass man ein stehendes Bild oder vorteilhafterweise ein bewegtes Bild erhält. Diese Bildinformation soll nun nicht - wie bei bisherigen Verfahren - nur auf einem Display angezeigt oder gespeichert werden, sondern sie soll direkt und unmittelbar am betrachteten Objekt visualisiert, das heißt sichtbar gemacht werden, wobei natürlich die Speicherung und die Anzeige auf einem Display weiterhin optional möglich ist.

Bei einer Ausgestaltung kann vorgesehen sein, dass das Falschfarbenbild fortlaufend oder wiederkehrend aktualisiert wird. Somit können fortlaufend neue Raumwinkelbereiche aufgenommen und ausgeleuchtet werden.

Besonders günstige Gebrauchseigenschaften können erreicht werden, wenn die Projektion zeitgleich mit der Erstellung eines aktualisierten ortsaufgelösten Messergebnisses durchgeführt wird.

Es ist natürlich unbenommen, das gemessene Signal zusätzlich zur Projektion auch auf einem Display oder Bildschirm 5 darzustellen, was in manchen Situationen immer noch benötigt wird und weiterhin die klassische Arbeitsweise und beispielsweise die Erstellung eines Berichts erlaubt, wozu die Speicherung der Messdaten und eventuell auch der Daten der visuellen Kamera geeignet ist.

Das Verfahren hängt nicht davon ab, ob die genannten Elemente in ein Gehäuse integriert sind, oder modular vorliegen und dann zweckmäßigerweise mit Verbindungsmöglichkeiten für den Datenaustausch verfügen und sich vorteilhafterweise mechanisch untereinander verbinden lassen.

Die Erfindung ist in einem breiten Anwendungsspektrum einsetzbar. Beispielsweise kann vorgesehen sein, dass zur Erstellung des ortsaufgelösten Messergebnisses eine nicht unmittelbar für das menschliche Auge sichtbare physikalische Eigenschaft des Objektes erfasst und ausgewertet wird/werden. Eine Liste von Beispielen hierfür umfasst abgestrahlte elektromagnetische und/oder akustische und/oder ionisierende Wellenfelder.

Besonders günstig ist es, wenn Bildbereiche des Falschfarbenbildes, welche über das ortsaufgelöste Messergebnis jeweils einem Objektbereich des Objektes zugeordnet sind, auf die jeweiligen Objektbereiche projiziert werden. Somit kann eine direkte Untersuchung der betrachteten Szene durchgeführt werden.

Zur Unterstützung der Untersuchung kann vorgesehen sein, dass mit der Darstellungseinheit zusätzliche Informationen auf das Objekt projiziert werden.

Um Störungen durch einen Szeneuntergrund zu kompensieren, kann vorgesehen sein, dass für das Falschfarbenbild eine Farb- und/oder Helligkeitscodierung verwendet wird, welche die Farb- und/oder Helligkeitseigenschaften des Objektes berücksichtigt.

Hierzu kann beispielsweise vorgesehen sein, dass zusätzlich ein Abbild des Objektes im sichtbaren Wellenlängenbereich aufgenommen wird. Durch Auswertung des Abbildes können Informationen über Farb- und/oder Helligkeitseigenschaften, beispielsweise Emmsions-, Transmissions- und/oder Reflektionswerte, gewonnen werden.

Die kann auf einfache Weise dadurch erfolgen, dass zur Erfassung der Farb- und/oder Helligkeitseigenschaften das Objekt mit der Darstellungseinheit gleichmäßig beleuchtet wird.

Für eine verbesserte Messwerterfassung kann vorgesehen sein, dass eine Strahlungsquelle zur Aktivierung der nicht unmittelbar für das menschliche Auge sichtbaren Eigenschaft des Objektes verwendet wird.

Bei einer Ausgestaltung kann vorgesehen sein, dass die Projektion mittels Laserstrahlen durchgeführt wird. Von Vorteil ist dabei, dass eine hohe Bildschärfe des projizierten Bildes erreichbar ist.

Zur Lösung der Aufgabe sind erfindungsgemäß bei einer Messanordnung der eingangs genannten Art die Merkmale des Anspruchs 11 vorgesehen. Insbesondere wird somit vorgeschlagen, dass die Darstellungseinheit zur Projektion des Falschfarbenbildes in einen zweiten Raumwinkelbereich eingerichtet ist, welcher zweiter Raumwinkelbereich mit dem ersten Raumwinkelbereich überlappt oder übereinstimmt. Der erste Raumwinkelbereich kann somit in dem zweiten Raumwinkelbereich enthalten sein oder umgekehrt, oder der erste Raumwinkelbereich und der zweite Raumwinkelbereich können einen gemeinsamen Raumwinkelbereich aufweisen.

Zur Ausführung des erfindungsgemäßen Verfahrens kann eine Kameraeinheit zur Aufnahme im sichtbaren Wellenlängenbereich ausgebildet sein.

Um eine gute Übereinstimmung des projizierten Bildes mit der in dem Raumwinkelbereich erfassten Szene zu erreichen, kann vorgesehen sein, dass die Messeinheit und die Darstellungseinheit, insbesondere mit dem ersten Raumwinkelbereich und dem zweiten Raumwinkelbereich, derart zueinander ausgerichtet oder ausrichtbar sind, dass eine Parallaxe minimiert ist.

Zur Projektion des Falschfarbenbildes kann die Darstellungseinheit einen Projektor oder Beamer, insbesondere einen Laserprojektor oder Laserbeamer, aufweisen.

Zur Verbesserung des Aufnahmeergebnisses kann eine Strahlungsquelle vorgesehen sein, welche zur Aktivierung einer physikalischen Eigenschaft eines angestrahlten Objektes eingerichtet ist, wobei das Messgerät sensitiv auf die physikalische Eigenschaft ist.

Gute Gebrauchseigenschaften können erreicht werden, wenn die Messeinheit und/oder die Darstellungseinheit und/oder die oder eine Strahlungsquelle und/oder die Umwandlungs- und Datenverarbeitungseinheit und/oder die oder eine Kameraeinheit und/oder die oder eine Displayeinheit in einem gemeinsamen Gehäuse angeordnet sind, insbesondere als handgehaltenes Gerät.

### Weitere Ausgestaltungen

Mit der Erfindung lassen sich weitere Ausgestaltungen bilden, von denen im Folgenden einige exemplarisch erläutert werden. Zur Erläuterung können die Figuren herangezogen werden, auf deren Details sich die in Klammern angeführten Bezugszeichen in nicht beschränkender Weise beziehen.

Ausgestaltung Nr. 1: Bei einer Ausgestaltung der Erfindung eines Verfahrens zur Visualisierung von ortsaufgelösten Messergebnissen von nicht unmittelbar für das menschliche Auge sichtbaren Eigenschaften, kann vorgesehen sein, dass die zunächst in einem Raumwinkelbereich R1 von der Messeinheit (1) oder dem Messgerät aus der Distanz gemessene Eigenschaft anschließend möglicherweise zwischengespeichert oder umgewandelt wird oder durch automatisierte datentechnische Bearbeitung der Messdaten mittels einer Umwandlungs- und Datenverarbeitungseinheit (2) oder Vorrichtung in ein Falschfarbenbild mit frei wählbarer Farb- oder Helligkeitscodierung umgewandelt wird, welches weiter an eine Darstellungseinheit (3) übertragen und schließlich möglichst zeitnah mit der Messung als Abbildung der umgeformten Messwerte im für das menschliche Auge sichtbaren Wellenlängenbereich unmittelbar in den Raumwinkelbereich R3 projiziert wird, so dass das betrachtete Objekt farbig beleuchtet wird, wobei die lokale Farbe oder die Helligkeit durch die Messwerte bestimmt ist und auf diese Weise die Messergebnisse unmittelbar auf dem betrachteten Objekt visualisiert werden, wobei die Raumwinkelbereiche R1 und R3 vorteilhafterweise möglichst genau übereinstimmen und die räumliche Entfernung zwischen der Messeinheit (1) oder dem Messgerät und der Darstellungseinheit (3) oder Darstellungseinrichtung vorteilhafterweise möglichst klein ist, um eine störende Parallaxe zwischen dem gemessenen und dem projizierten Bild zu minimieren; die Umwandlungs- und Datenverarbeitungseinheit (2) oder Vorrichtung (2) kann optional auch die flüchtige oder nichtflüchtige Aufzeichnung beziehungsweise Speicherung der Messergebnisse sowie möglicherweise weiteren Informationen durchführen oder die Daten an weitere Geräte wie beispielsweise ein Computernetzwerk übertragen.

Die Ausgestaltung Nr. 1 bietet die folgenden zusätzlichen Vorteile: Bei einer bevorzugten Anwendung in der Kriminaltechnik oder Forensik ist es für ein Team von Ermittlern von großem Vorteil, wenn die gemessene und für das menschliche Auge nicht direkt sichtbare Eigenschaft unmittelbar an Ort und Stelle sowie direkt am Objekt erfindungsgemäß sichtbar gemacht werden kann und wenn man mit dem erfindungsgemäßen Verfahren sehr schnell und einfach den Ort und das Umfeld untersuchen kann. Einfach bedeutet, dass man das erfindungsgemäße Verfahren beispielsweise durch ein mobiles, vorteilhafterweise batteriegetriebenes Gerät anwendet und ähnlich einer "magischen Taschenlampe" den betrachteten Raumwinkel durch herumschwenken eines Gerätes zur Durchführung des Verfahrens variiert und so nach möglichen Spuren sucht, wobei der oder die Anwender nicht auf einen kleinen Display blicken, sondern sich auf die untersuchten Objekte konzentrieren können, auf denen die gemessene Eigenschaft dann durch das projizierte Falschfarbenbild sichtbar visualisiert wird. Insbesondere bei einer solchen Anwendung kann es von großer Wichtigkeit sein, dass die Spuren möglichst schnell erkannt werden können, da sich möglicherweise ein Tatverdächtiger auf der Flucht befindet oder gar Menschenleben in Gefahr sind.

Genauso ist es beim erfindungsgemäßen Vorgehen zur bevorzugten Anwendung zur Suche eines Fehlers oder eines verborgenen Lecks beispielsweise an der Leitung einer Fußbodenheizung unter Verwendung eines thermografischen Messgerätes ein wesentlicher Vorteil, wenn man die entsprechende Stelle direkt sichtbar machen und visualisieren kann, so dass man die Stelle beispielsweise mit einem einfach Stift markieren kann und dann mit den Reparaturarbeiten beginnt. Man kann auch während der Reparaturarbeiten immer wieder nachmessen und bekommt jeweils unmittelbar die problematische Stelle angezeigt.

Die Übereinstimmung der Raumwinkelbereiche R1 und R3 ist in der Theorie fast trivial, in der Umsetzung mit existierenden, kommerziell verfügbaren Geräten jedoch schwierig, da die Optiken von Beamern oder Projektoren fast durchweg andere Winkelbereiche erfassen, als sie beispielsweise von den meisten thermografischen Kameras standardmäßig gemessen werden. Man benötigt also ein speziell angepasstes Linsensystem oder einen speziell angepasstes laserbasiertes Gerät als Darstellungseinheit (3) oder Darstellungsgerät (3) oder gar eine angepasste Spezialoptik für die jeweilige Messeinheit (1) oder das jeweilige Messgerät (1).

Eine weitere vorteilhafte Anwendung ist denkbar zur Visualisierung von Radioaktivität (ein ortsaufgelöstes Messgerät vorausgesetzt), was für jemanden, der sich in stellenweise verseuchtem Gebiet bewegt, ein möglicherweise lebenswichtiger Vorteil ist, da er unmittelbar da, wo er sich hinbewegt sehen kann, wo starke Kontamination herrscht.

Eine weitere Anwendung kann mit Hilfe von Ultraschall und einem entsprechenden ortsaufgelösten Messgerät dazu verwendet werden, die Härte von Objekten zu charakterisieren oder um ein fliegendes oder schwebendes Objekt sichtbar hervorzuheben, beispielsweise für wissenschaftliche Anwendungen.

Die optionale Möglichkeit, die Bilddaten auch zu speichern ermöglicht und erleichtert die klassische Arbeitsweise, bei der ein Bericht mit Bildern aus den Messdaten des Messgerätes (1) erstellt wird; diese Vorgehensweise soll durch das beschriebene Verfahren ja nicht ersetzt, sondern lediglich verbessert werden. Zu Dokumentationszwecken ist insbesondere die Speicherung der Messdaten mit der Datenverarbeitungseinheit (2) hilfreich.

Ausgestaltung Nr. 2: Bei der Ausgestaltung Nr. 1 kann zusätzlich vorgesehen sein, dass zusätzlich noch eine Kameraeinheit (4) oder Kameraeinrichtung (4) für den für das menschliche Auge sichtbaren Wellenlängenbereich hinzugezogen wird, die den Raumwinkelbereich R4 erfasst, der vorteilhafterweise mit dem gesamten von der Darstellungseinheit (3) oder Displayeinheit (3) beleuchteten Raumwinkelbereich R3 oder auch nur einem Teilbereich davon möglichst genau übereinstimmt, und dessen Bildsignal an die Umwandlungs- und Datenverarbeitungseinheit (2) übertragen wird, wo es zur Modifikation und Verbesserung der Darstellung durch die Darstellungseinheit (3) oder das Darstellungsgerät herangezogen wird, indem die Farb- und Helligkeitseigenschaften der betrachteten Objekte automatisch berücksichtigt und kompensiert werden, wobei die Kompensation beispielsweise darin bestehen kann, dass ein dunkleres Objekt mit mehr Lichtstärke angestrahlt wird, als ein helleres Objekt, so dass für den Anwender die zu visualisierende, gemessene Eigenschaft möglichst gleichmäßig sichtbar wird und ohne zu stark durch die optischen Eigenschaften im sichtbaren Bereich beeinflusst zu sein; die Kameraeinheit (4) befindet sich vorteilhafterweise räumlich möglichst nah an der Messeinheit (1) oder am Messgerät (1) und der Darstellungseinheit (3); das Signal der Kamera kann entweder kontinuierlich zur fortlaufenden Korrektur verwendet werden, oder es kann in geeigneten Zeitabständen oder wenn ein anderer Raumwinkelbereich betrachtet wird jeweils eine Aufnahme gemacht werden, während die Darstellungseinheit (3) oder Displayeinheit (3) für kurze Zeit kein Licht oder vollständig weißes Licht projiziert, um so die Farb- und Helligkeitseigenschaften der betrachteten Objekte sowie die Beleuchtungssituation zu erfassen.

Die Ausgestaltung Nr. 2 bietet die folgenden zusätzlichen Vorteile: Der Vorteil der Verwendung des Signals der Kameraeinheit (4) in der Umwandlungs- und Datenverarbeitungseinheit (2) wird deutlich, wenn man sich folgende Situation in der Anwendung des erfindungsgemäßen Verfahrens vorstellt: gesucht wird beispielsweise mit unter Verwendung eines thermografischen Messgerätes ein Leck in der Rohrleitung einer Fußbodenheizung; der Fußboden besteht aus Fliesen in verschiedenen Farben im sichtbaren Bereich des Spektrums. Dadurch hängt das durch Reflexion sichtbare Bild der Projektion der Darstellungseinheit (3) natürlich von der Farbe der jeweiligen Fliese ab. Wird dies durch die Kamera mit erfasst, so kann die Umwandlungs- und Datenverarbeitungseinheit (2) beispielsweise automatisch eine andere Art der Falschfarbendarstellung verwenden oder die Helligkeit beziehungsweise die Farbe des projizierten Bildes kann automatisch lokal angepasst werden, so dass die sichtbare Darstellung für den Anwender möglichst unabhängig von der natürlichen Farbe des betrachteten Objekts im sichtbaren Bereich des Spektrums wird.

Ausgestaltung Nr. 3: Bei einer Ausgestaltung gemäß Nr. 1 oder 2 kann zusätzlich vorgesehen sein, dass die Messeinheit (1) sowie die Darstellungseinheit (3) zusätzlich mit einer optionalen Displayeinheit (5) zur Anzeige der Messergebnisse ausgestattet wird, auf welcher gegebenenfalls auch Zusatzinformationen zu den Messdaten oder Informationen zum Status oder zur Konfiguration des Systems sowie zur Anwenderinteraktion ausgegeben werden können.

Die Ausgestaltung Nr. 3 bietet die folgenden zusätzlichen Vorteile: Bei sehr ungünstigen Umgebungsbedingungen wie zu großer Umgebungshelligkeit oder sehr dunklen oder schwarzen Gegenständen, auf denen die Projektion nicht gut sichtbar ist oder bei zu weit entfernten Gegenständen kann eine Anzeige auf einer Displayeinheit (5) immer noch hilfreich sein. Das Display zeigt das Falschfarbenbild der gemessenen Eigenschaft ohne eine Modifikation durch optische Eigenschaften des Objektes. Weiterhin kann ein Display bei Einstellungen für die Aufnahmeparameter der Messeinheit (1) von Nutzen sein.

Ausgestaltung Nr. 4: Bei einer Ausgestaltung gemäß einer der Nr. 1 bis 3 kann zusätzlich vorgesehen sein, dass zusätzlich noch eine optionale Kameraeinrichtung für den sichtbaren Wellenlängenbereich hinzugezogen wird, mit der mindestens der gesamte betrachtete Raumwinkelbereich R1 oder auch nur Teilbereich davon so aufgezeichnet werden kann, wie es in der Beleuchtung mit der Projektion der Falschfarbendarstellung der Messergebnisse erscheint, wobei das Bild der Kamera wahlweise und optional auch von der Verarbeitungseinheit (2) gespeichert oder auf der Displayeinheit (5), dem Display (5), dargestellt werden kann oder alternativ durch die Kameraeinheit direkt gespeichert oder an weitere Geräte übertragen wird; die Kameraeinheit kann vorteilhafterweise mit der Kameraeinheit (4) aus der Ausgestaltung Nr. 2 identisch sein, oder es kann auch ein zusätzliches und unabhängiges Gerät sein.

Die Ausgestaltung Nr. 4 bietet die folgenden zusätzlichen Vorteile: Durch die zusätzliche Verwendung einer optionalen Kameraeinheit (4) lässt sich die Dokumentation erweitern und vervollständigen. Es kann durchaus wünschenswert und von Vorteil sein, das, was mit dem Verfahren sichtbar gemacht wird, in möglichst genau dieser Form zugleich auch zu erfassen und optional auch beispielsweise mit der Umwandlungs- und Datenverarbeitungseinheit (2) abzuspeichern.

Insbesondere kann man bei Anwendung des Verfahrens beispielsweise mit einem thermografischen Sensor, die nach dem heutigen Stand der Technik eine im Vergleich zu fotografischen Kameras sehr geringe Bildauflösung haben, so ein sehr viel höher aufgelöstes Bild mit beispielsweise einer normalen fotografischen Kamera erzeugen, welche wesentlich kostengünstiger ist. Dies ist eine Möglichkeit, um die räumliche Auflösung des Messgerätes auf sehr kostengünstige Art stark zu erhöhen.

Insbesondere bei dem hier genannten Beispiel unter Verwendung eines thermografischen Messgerätes ist diese Art der Erhöhung der Bildauflösung in vielen Fällen durchaus angebracht und zulässig, da Wärme dazu neigt, ein thermisches Gleichgewicht anzustreben und sich verteilt, wodurch zunächst scharfe Unterschiede mit der Zeit verschmieren; es gehen also wenige oder keine Details verloren.

Ausgestaltung Nr. 5: Bei einer Ausgestaltung gemäß einer der Nr. 1 bis 4 kann zusätzlich vorgesehen sein, dass die Darstellungseinheit (3) oder das Darstellungsgerät (3) die Projektion mittels Laserstrahlen aus einer oder mehreren Laserlichtquellen durchführt und beispielsweise als ein Laserbeamer oder ein Laserprojektor ausgeführt ist und dadurch prinzipbedingt unabhängig von der Projektionsdistanz immer ein scharfes Bild im gesamten Raumwinkelbereich R3 liefert.

Die Ausgestaltung Nr. 5 bietet die folgenden zusätzlichen Vorteile: Die Verwendung eines laserbasierten Verfahrens in der Darstellungseinheit (3) hat den großen Vorteil, dass insbesondere bei nicht-orthogonaler Projektion oder bei Projektion auf gekrümmte Flächen oder bei gleichzeitigen Projektion auf mehrere zugleich untersuchte und gemessene Gegenstände, welche sich in unterschiedlichem Abstand von der Darstellungseinheit (3) befinden, man überall zugleich ein scharfes Projektionsbild erhält. Ferner vereinfacht sich die Darstellungseinheit (3), da man weder Optik noch Mechanik benötigt, um das Bild zu fokussieren. Prinzipiell kann das Verfahren auf sehr große Entfernungen angewendet werden, da es starke Laser gibt, wobei natürlich entsprechende Sicherheitsrichtlinien zu beachten sind.

Ausgestaltung Nr. 6: Bei einer Ausgestaltung gemäß einer der Nr. 1 bis 5 kann zusätzlich vorgesehen sein, dass die Darstellungseinheit (3) oder das Darstellungsgerät (3) als Projektor oder als Beamer ausgeführt ist.

Die Ausgestaltung Nr. 6 bietet die folgenden zusätzlichen Vorteile: Beamer oder Projektoren sind auch mit sehr hoher Lichtstärke verfügbar, was eine Anwendung des Verfahrens mit einem solchen Gerät als Darstellungseinheit (3) auch bei stärkerem vorhandenem Umgebungslicht oder aus größerer Distanz erlaubt, da das projizierte Bild heller und somit deutlicher sichtbar ist. Ferner ist eine Anwendung aus tendenziell größerer Entfernung möglich, ohne durch Sicherheitsrichtlinien wie bei der Verwendung von Lasern eingeschränkt zu sein.

Ausgestaltung Nr. 7: Bei einer Ausgestaltung gemäß einer der Nr. 1 bis 6 kann zusätzlich vorgesehen sein, dass die Messeinheit (1) oder das Messgerät (1) eine thermografische Kamera ist, welche für die Strahlung im ferninfraroten Bereich des elektromagnetischen Spektrums mit Wellenlängen beispielsweise im Bereich von etwa 8 bis 12µm empfindlich ist.

Die Ausgestaltung Nr. 7 bietet die folgenden zusätzlichen Vorteile: Da Wärmestrahlung für das menschliche Auge nicht unmittelbar sichtbar ist, ist eine thermografische Kamera ein erfindungsgemäß bevorzugtes Messgerät für welches sich das vorliegende Verfahren zur Visualisierung eignet. Eine bevorzugte Anwendung ist beispielsweise die Suche nach Lecks in verborgenen Leitungen oder Fehlern an Anlagen oder Gebäuden.

Eine weitere Möglichkeit ist die kostengünstige Erstellung von hochaufgelösten Bildern mit thermografischer Information, wenn beispielsweise auf ein ganzes Gebäude oder auch auf einen Teil davon das thermografische Bild projiziert wird und mit einer handelsüblichen Kamera wiederum fotografiert wird; thermografische Kameras sind derzeit ein Vielfaches teurer als herkömmliche Digitalkameras und die thermografischen Messgeräte verfügen nur über einen Bruchteil der Pixelauflösung.

Typischerweise ist bei einer thermografischen Messung diese Art der Erhöhung der Bildauflösung in vielen Fällen durchaus angebracht und zulässig, da Wärme dazu neigt, ein thermisches Gleichgewicht anzustreben und sich verteilt, wodurch zunächst scharfe Unterschiede mit der Zeit verschmieren; es gehen also wenige oder keine Details der thermischen Eigenschaft verloren, aber man gewinnt sehr viel an Auflösung, wobei das Bild natürlich zugleich mit dem normalen sichtbaren Bild kombiniert wird.

Ausgestaltung Nr. 8: Bei einer Ausgestaltung gemäß einer der Nr. 1 bis 7 kann zusätzlich vorgesehen sein, dass die Messeinheit (1) oder das Messgerät (1) ein Bild aus Radiowellen oder Mikrowellen oder Terahertzstrahlung oder radioaktiver Strahlung oder Röntgenstrahlung oder aus Schallwellen aufnimmt und gegebenenfalls optional eine Strahlungsquelle (6) für die Ausleuchtung von mindestens des Raumwinkelbereichs R1 mit elektromagnetischer Strahlung von geeignetem Wellenlängenbereich beziehungsweise ein Sender von Schall mit geeigneter Frequenz zum Einsatz kommt, um dem Messgerät (1) ein hinreichend starkes (reflektiertes) Signal zu ermöglichen.

Die Ausgestaltung Nr. 8 bietet die folgenden zusätzlichen Vorteile: Weite Bereiche des elektromagnetischen Spektrums sowie natürlich Schallwellen oder (radioaktive) Teilchenstrahlung sind für das menschliche Auge nicht unmittelbar sichtbar und somit sind auch diese Strahlungen für die Visualisierung mit dem erfindungsgemäßen Verfahren geeignet, sofern es eine geeignete Messeinheit (1) oder ein geeignetes Messgerät (1) gibt, mit der/dem man ein ortsaufgelöstes Bild aufnehmen kann.

Falls die Objekte keine Strahlung aussenden oder die aus anderer Quelle stammende Strahlung kein hinreichend starkes Signal an der Messeinheit (1) erzeugt, bietet es sich an, das zu untersuchende Objekt mit einer geeigneten Strahlungsquelle (6) zu bestrahlen und so für ein hinreichend starkes Signal am Messgerät zu sorgen.

Eine vorteilhafte Anwendung ist denkbar zur Visualisierung von Radioaktivität (ein ortsaufgelöstes Messgerät vorausgesetzt), was für jemanden, der sich beispielsweise in stellenweise kontaminierten Gebiet bewegt, ein eventuell lebenswichtiger Vorteil ist. Es ist natürlich ebenfalls vorteilhaft, wenn man tatsächlich auf die Umgebung schauen kann, und nicht auf die Anzeige von einem Messgerät während man sich fortbewegt.

Eine weitere Anwendung kann mit Hilfe von Ultraschall und einem entsprechenden ortsaufgelösten Messgerät dazu verwendet werden, die Härte von Objekten zu charakterisieren oder um ein fliegendes oder schwebendes Objekt sichtbar hervorzuheben, beispielsweise für wissenschaftliche Anwendungen.

Ausgestaltung Nr. 9: Bei einer Ausgestaltung gemäß einer der Nr. 1 bis 8 kann zusätzlich vorgesehen sein, dass die Messeinheit (1) oder das Messgerät (1) eine Kamera ist, deren Sensor ultraviolette Strahlung mit einer Wellenlänge kleiner 400nm oder Strahlung im nahen Infrarotbereich mit einer Wellenlänge größer als etwa 700nm aufzeichnet und optional eine Strahlungsquelle (6) für die Ausleuchtung von mindestens des Raumwinkelbereichs R1 mit elektromagnetischer Strahlung von geeignetem Wellenlängenbereich zum Einsatz kommt, um der Messeinheit (1) oder dem Messgerät (1) ein hinreichend starkes (reflektiertes) Signal zu ermöglichen.

Die Ausgestaltung Nr. 9 bietet die folgenden zusätzlichen Vorteile: Da ultraviolette Strahlung für das menschliche Auge nicht unmittelbar sichtbar ist, ist eine für diesen Bereich des Spektrums geeignete Kamera eine erfindungsgemäßebevorzugte Messeinheit (1), welches sich für das vorliegende Verfahren zur Visualisierung eignet.

Ebenso ist nahinfrarote Strahlung für das menschliche Auge nicht unmittelbar sichtbar, und somit stellt auch eine für diesen Bereich des Spektrums geeignete Kamera eine erfindungsgemäß bevorzugte Messeinheit (1) dar, welches sich für das vorliegende Verfahren zur Visualisierung eignet.

Wenn die Strahlung aus der Umgebung im ultravioletten oder nahinfraroten Bereich nicht ausreichen sollte, um mit der Messeinheit (1) ein gutes Bild zu erfassen, bietet es sich an, mit einer geeigneten künstlichen Strahlungsquelle (6) für ausreichende Beleuchtung und somit ein ausreichendes reflektiertes Signal zu sorgen, welches von der Messeinheit (1) erfasst werden kann.

Ausgestaltung Nr. 10: Bei einer Ausgestaltung gemäß einer der Nr. 1 bis 9 kann zusätzlich vorgesehen sein, dass die Messeinheit (1), die Darstellungseinheit (3), die Strahlungsquelle (6), die Umwandlungs- und Datenverarbeitungseinheit (2), die Kameraeinheit (4) und die Displayeinheit (5) in beliebiger Kombination als separate Geräte ausgeführt sind oder teilweise kombiniert in ein gemeinsames Gehäuse ausgeführt sind, wobei die Geräte jeweils mit geeigneten Vorrichtungen zur gegenseitigen Signalübertragung ausgestattet sind, so dass die jeweils relevanten Daten gesendet oder empfangen werden können; vorteilhafterweise sind die Geräte mechanisch so ausgelegt, dass man zumindest die Einheiten oder Geräte (1), (3) und optional auch (4) räumlich möglichst nah aneinander anordnen kann und die Raumwinkelbereiche R1 und R3 und gegebenenfalls R4 in gute Übereinstimmung gebracht werden können; insbesondere kann es vorteilhaft sein, die Umwandlungs- und Datenverarbeitungseinheit (2) zusammen mit der Darstellungseinheit (3) in ein gemeinsames Gehäuse der Messanordnung (8) zu kombinieren, welches sich dann mit unterschiedlichen Messeinheiten (1) oder Messgeräten (1) kombinieren lässt.

Von Vorteil ist dabei, dass mit einer Ausführung in einem Gehäuse die räumliche Nähe besonders gut sichergestellt werden kann. Ferner kann durch die Konstruktion die gute Übereinstimmung zwischen den Raumwinkelbereichen R1 und R3 und gegebenenfalls auch R4 sichergestellt werden. Weiterhin ist eine solche Ausführung besonders leicht in der Handhabung.

Eine Ausführung mit teilweise getrennten Gehäusen erlaubt eine leichte Kombination beispielsweise der Darstellungseinheit (3) mit unterschiedlichen Messgeräten, welche ja häufig relativ teure Investitionsgüter sind. Die einzelnen Geräte lassen sich dann modular zusammensetzen und Teile können für verschiedene Anwendungen verwendet werden. Reparaturen an den Geräten sind möglicherweise einfacher oder kostengünstiger durchführbar. Es ist beispielsweise denkbar, die Darstellungseinheit (3) und Umwandlungs- und Datenverarbeitungseinheit (2) oder die Übertragungs- und Umwandlungseinheit (2) sowohl mit einem thermografischen Messgerät als auch mit einer Kamera für ultraviolettes Licht zu verwenden.

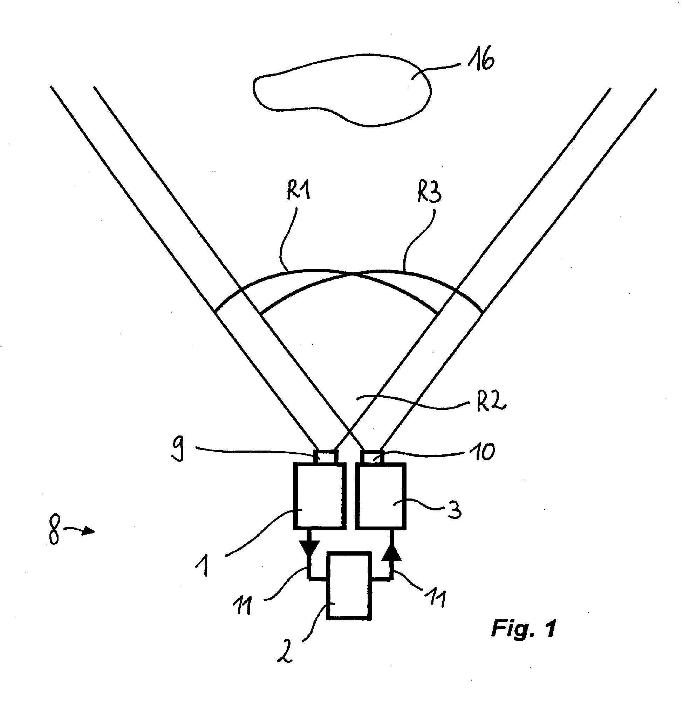

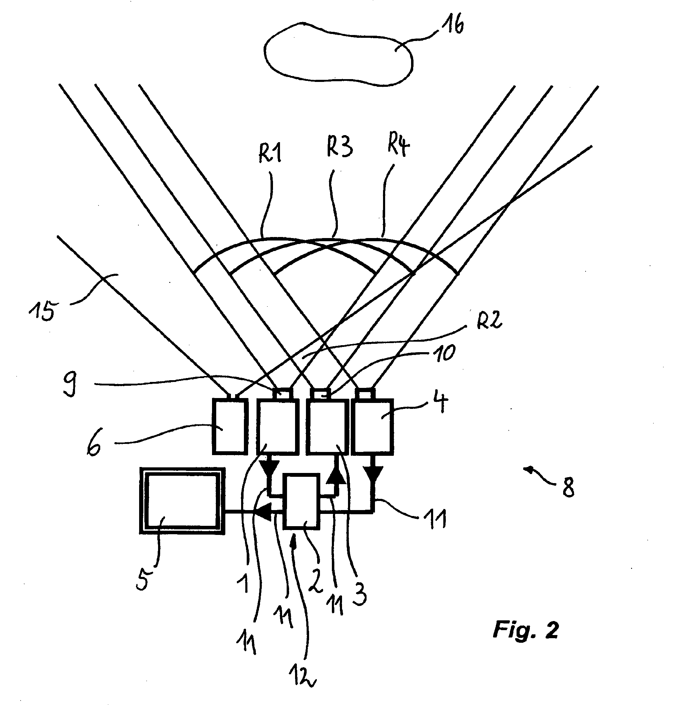

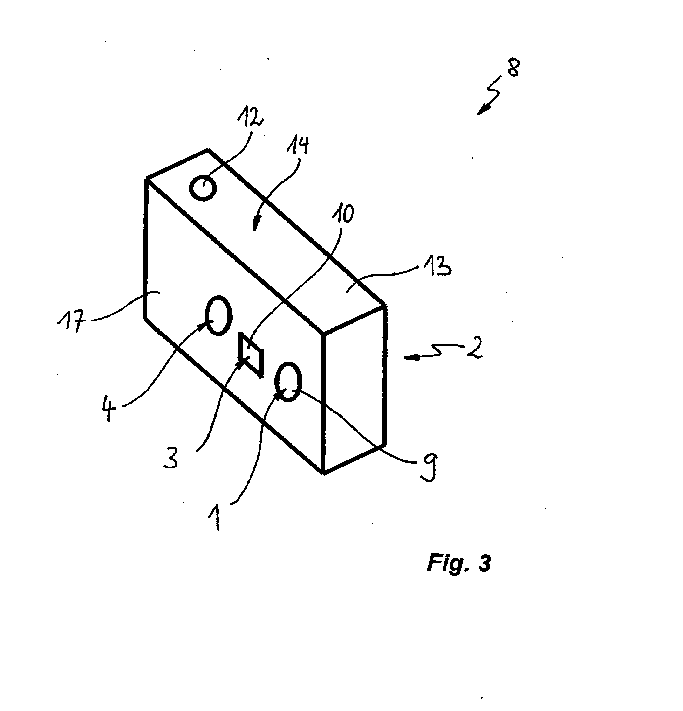

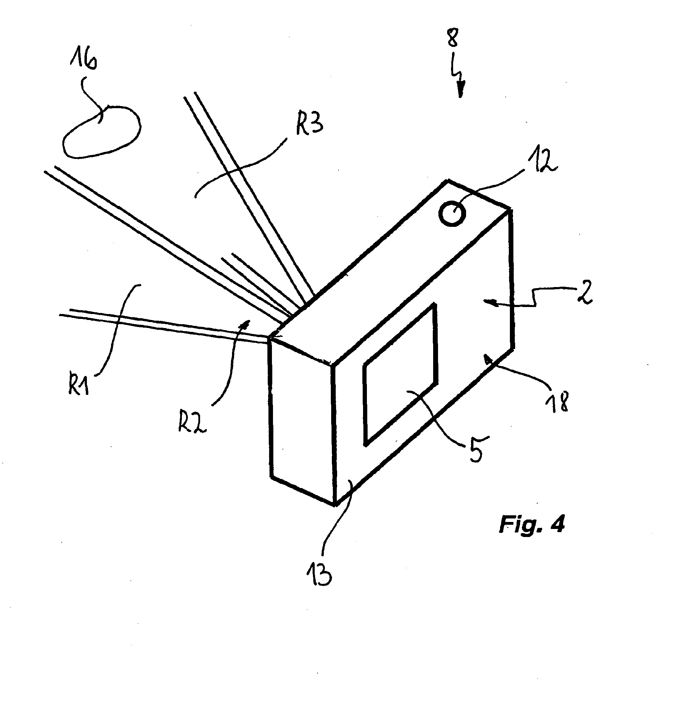

Ein bevorzugtes Ausführungsbeispiel ist eine Messanordnung 8 als ein integriertes Gerät zur Durchführung des Verfahrens wie in Figur 1 und 2 skizziert, welches ähnlich aussehen kann wie in Figuren 3 und 4 schematisch dargestellt. Die Messanordnung 8 verfügt über eine Messeinheit 1 wie beispielsweise eine thermografische Kamera, eine Darstellungseinheit 3 wie beispielsweise einen laserbasierten Projektor, eine visuelle Kameraeinheit 4 zur Kompensation der visuellen Objekteigenschaften im sichtbaren Bereich sowie schließlich die zur Umwandlung der Messdaten in ein Falschfarbenbild mit entsprechenden Korrekturen notwendige Umwandlungs- und Datenverarbeitungseinheit 2, welche beispielsweise in Form einer programmierbaren elektronischen Schaltung im Gehäuseinneren realisiert sein kann. Auf der Rückseite, die dem Anwender zugewandt ist, befindet sich eine Displayeinheit 5 als Display zur direkten Darstellung der Messergebnisse sowie möglicher Zusatzinformationen und zur Interaktion mit dem Anwender; zweckmäßigerweise sind auch geeignete Schaltelemente vorhanden. Das Gerät, also die Messanordnung 8, hat vergleichbare Abmessungen wie eine handelsübliche Digitalkamera, so dass es leicht vom Anwender gehalten und bewegt werden kann. Idealerweise verfügt es über eine Stromversorgung beispielsweise mit einer Batterie um einen mobilen Einsatz zu ermöglichen und die Speicherung der Messdaten kann beispielsweise auf einer flash-basierten Speicherkarte erfolgen.

Die beigefügten Figuren dienen der beispielhaften und schematischen Erläuterung des erfindungsgemäßen Verfahrens. Nicht dargestellt sind mechanische Vorrichtungen, die die Elemente der Anordnung räumlich zueinander fixieren und ausrichten, was hilfreich, aber für das Verfahren nicht wesentlich ist; dies könnte beispielsweise durch ein geeignetes Gehäuse oder auch eine Halterung geschehen. Ebenfalls nicht dargestellt sind Schalter und Bedienelemente zur Interaktion mit dem Benutzer sowie die notwendige Energieversorgung der verschiedenen Elemente, da dies auch nicht wesentlich für das Verfahren sind. Die Nummern zur Bezeichnung der Elemente sowie der Raumwinkel ziehen sich durch alle Figuren, so dass beispielsweise die Messeinheit immer mit der Nummer 1 bezeichnet wird.

Figur 1 stellt eine Aufsicht auf wichtige Elemente einer Messanordnung 8 zur Durchführung des erfindungsgemäßen Verfahrens dar. Die Messeinheit 1, welche eine Sensoreinheit hat, ist hier beispielhaft so dargestellt, dass die Blickrichtung des Sensors mit einem angedeuteten Objektiv 9 oder der Sensoröffnung nach oben gerichtet ist. Der betrachtete Raumwinkel ist in dieser zweidimensionalen Aufsicht der Winkelbereich R1. Über eine geeignete Übertragungsverbindung gelangen die Messdaten der Sensoreinheit der Messeinheit 1 zu einem zwischengeschalteten Element, der Umwandlungs- und Datenverarbeitungseinheit 2, welches die datentechnische Bearbeitung der Messdaten und die Umwandlung in ein Falschfarbenbild ermöglicht. Dieses Falschfarbenbild wird weiter an die Darstellungseinheit 3 übertragen, welche sich neben der Messeinheit 1 befindet und ebenfalls nach oben gerichtet ist und dadurch den Raumwinkelbereich R3 ausleuchtet, wobei R1 ungefähr oder exakt gleich R3 ist. Die Raumwinkelbereiche R1 und R3 überlappen in einem gemeinsamen Raumwinkelbereich R2. Erkennbar ist ferner eine (unerwünschte) Parallaxe, dadurch hervorgerufen, dass sich die Sensoreinheit der Messeinheit 1 und die Darstellungseinheit 3 in endlichem Abstand voneinander befinden. Die Parallaxe wird kleiner, je näher die Objektive 9, 10 von 1 und 3 sind.

Figur 2 stellt zusätzlich die Erweiterungsmöglichkeiten dar, wie sie in den weiteren Ansprüchen beschrieben werden. Die einzelnen Elemente stehen untereinander zum Datenaustausch 11 in Verbindung, was durch Linien angedeutet ist. Im Einzelnen sind dies eine Kameraeinheit 4 als visuelle Kamera, welche den Raumwinkelbereich R4 erfasst, wobei R4 vorteilhafterweise gleich ist oder ungefähr gleich ist wie R3 und/oder R1; ein Displayeinheit 5 mit einem Display zur zusätzlichen oder alternativen Darstellung der Messergebnisse sowie zur Interaktion mit dem Anwender zur Bedienung und zur Hilfe für Einstellungen aller Art; eine erweiterte Einrichtung zur Datenverarbeitung mit einem Speichermittel 7, insbesondere zur Speicherung auf flüchtige oder nicht-flüchtige Art wie beispielsweise auf einer handelsüblichen Speicherkarte mit Flash-Speicher oder zur Übertragung an andere Geräte zur Datenverarbeitung beispielsweise über eine drahtlose Netzwerkverbindung; eine Strahlungsquelle 6, mit der gegebenenfalls das betrachtete Objekt mit Strahlung 15 eines geeigneten Spektralbereichs bestrahlt oder angeleuchtet werden kann, um dem Sensor der Messeinheit 1 ein hinreichend gutes (reflektiertes) Signal zur Messung zu ermöglichen.

Figur 3 stellt ein mögliches Beispiel für eine konkrete Gehäuseform dar, wobei eine Bauweise in Anlehnung an handelsübliche Digitalkameras gewählt wurde. Zu sehen ist die Vorderseite 17 der in einem Gehäuse 13 untergebrachten Messanordnung 8 mit den drei wichtigen Elementen des Objektives 9 oder der Öffnung für den Sensor der Messeinheit 1, der Öffnung oder des Objektives 10 für beispielsweise eine laserbasierte Darstellungseinheit 3, welche oder welches als Rechteck dargestellt ist, um anzudeuten, dass kein Linsensystem notwendig ist, sowie die visuelle Kamera der Kameraeinheit 4, mit der die Farbe oder Helligkeit der Projektion je nach Untergrund, beispielsweise entsprechend der zuvor beschriebenen vorteilhaften Ausgestaltung Nr. 1 zusammen mit der zuvor beschriebenen vorteilhaften Ausgestaltung Nr. 2, korrigiert wird. Zur leichteren räumlichen Orientierung im Vergleich mit Figur 4 wurde in Figur 3 ein beispielhaftes Bedienelement 12 (beispielhaft als Schalter gezeigt) auf der Oberseite 14 angedeutet, welches sich auch in Figur 4 wieder findet.

An dem Gehäuse 13, insbesondere an der Oberseite 14, können noch weitere, in an sich von Digitalkameras bekannter Weise ausgebildete Anzeigeeinheiten zur Unterstützung der Bedienung und/oder zur Anzeige eines Betriebszustandes der Messanordnung 8 angeordnet sein.

Figur 4 zeigt die Rückseite 18 der beispielhaften konkreten Ausführung von Figur 3. Angedeutet ist das Display der Displayeinheit 5 sowie die angedeuteten Raumwinkelbereiche R1 und R3 des Sensors 1 und der Darstellungseinheit 3, welche durch die räumliche Nähe relativ klein sind; um die Darstellung etwas übersichtlicher zu gestalten ist der Raumwinkelbereich R4 der visuellen Kameraeinheit 4 nicht eingezeichnet. Das beispielhafte Bedienelement 12 (beispielsweise ein Schalter) aus Figur 3 ist wieder zu erkennen und soll die räumliche Orientierung im Vergleich zu der Ansicht aus Figur 3 erleichtern.

Zusammenfassend kann zur Erfindung somit folgendes ausgeführt werden.

### 1. Verfahren zur Visualisierung

2.1 Es gibt Eigenschaften von Objekten, die für das menschliche Auge nicht sichtbar sind, aber die ortsaufgelöst messbar sind und bislang typischerweise auf einem Display dargestellt wurden. Das Verfahren soll eine bessere, direktere Visualisierung dieser Eigenschaft ermöglichen.
2.2 Mit einer Messeinheit 1 oder einem Messgerät 1 wird eine Eigenschaft wie beispielsweise die Oberflächentemperatur ortsaufgelöst gemessen, in ein Falschfarbenbild umgewandelt, welches dann an eine Darstellungseinheit 3 übertragen und auf das betrachtete Objekt projiziert wird, und somit direkt am Objekt visualisiert wird.
2.3 Ein Kriminaltechniker auf der Suche nach Spuren an einen Tatort verwendet beispielsweise ein Gerät zur Durchführung des Verfahrens mit einer Kamera für ultraviolettes Licht als Messgerät, indem er wie mit einer "magische Taschenlampe" den Tatort absucht, wobei er nicht auf einen kleinen Display schauen muss, sondern sich direkt auf den zu untersuchenden Bereich konzentrieren kann, auf dem die ansonsten unsichtbaren Spuren mittels der Projektion visuell hervorgehoben werden.

Bei einer Messanordnung 8 mit einer Messeinheit 1 wird vorgeschlagen, ein mit der Messeinheit 1 von einem Objekt 16 erfasstes ortsaufgelöstes Messergebnis in ein Falschfarbenbild umzuwandeln und das Falschfarbenbild mit einer Darstellungseinheit 3 auf das Objekt 16 zurückzuwerfen oder zu projizieren.

## Patentansprüche

1. Verfahren zur Visualisierung von ortsaufgelösten Messergebnissen, wobei mit einer Messeinheit (1) ein ortsaufgelösten Messergebnis von einem Objekt (16) erstellt wird und aus dem ortsaufgelösten Messergebnis ein Falschfarbenbild gewonnen wird, wobei zur Erstellung des ortsaufgelösten Messergebnisses eine Oberflächentemperatur des Objekts (16) mittels einer nicht sichtbaren Wärmestrahlung berührungslos mit einer thermographischen Kamera gemessen wird, **dadurch gekennzeichnet, dass** das Falschfarbenbild mit einer Darstellungseinheit (3) auf das Objekt (16) projiziert wird.

2. Verfahren nach Anspruch 1, **dadurch gekennzeichnet, dass** das Falschfarbenbild fortlaufend oder wiederkehrend aktualisiert wird.

3. Verfahren nach Anspruch 1 oder 2, **dadurch gekennzeichnet, dass** die Projektion zeitgleich mit der Erstellung eines aktualisierten ortsaufgelösten Messergebnisses durchgeführt wird.

4. Verfahren nach einem der Ansprüche 1 bis 3, **dadurch gekennzeichnet, dass** Bildbereiche des Falschfarbenbildes, welche über das ortsaufgelöste Messergebnis jeweils einem Objektbereich des Objektes (16) zugeordnet sind, auf die jeweiligen Objektbereiche projiziert werden.

5. Verfahren nach einem der Ansprüche 1 bis 4, **dadurch gekennzeichnet, dass** mit der Darstellungseinheit (3) zusätzliche Informationen auf das Objekt (16) projiziert werden.

6. Verfahren nach einem der Ansprüche 1 bis 5, **dadurch gekennzeichnet, dass** für das Falschfarbenbild eine Farb- und/oder Helligkeitscodierung verwendet wird, welche die Farb- und/oder Helligkeitseigenschaften des Objektes (16) berücksichtigt.

7. Verfahren nach einem der Ansprüche 1 bis 6, **dadurch gekennzeichnet, dass** zusätzlich ein Abbild des Objektes (16) im sichtbaren Wellenlängenbereich aufgenommen wird.

8. Verfahren nach einem der Ansprüche 1 bis 7, **dadurch gekennzeichnet, dass** zur Erfassung der Farb- und/oder Helligkeitseigenschaften das Objekt, vorzugsweise mit der Darstellungseinheit (3), gleichmäßig beleuchtet wird.

9. Verfahren nach einem der Ansprüche 1 bis 8, **dadurch gekennzeichnet, dass** eine Strahlungsquelle (6) zur Aktivierung der nicht unmittelbar für das menschliche Auge sichtbaren Eigenschaft des Objektes (16) verwendet wird.

10. Verfahren nach einem der Ansprüche 1 bis 9, **dadurch gekennzeichnet, dass** die Projektion mittels Laserstrahlen durchgeführt wird.

11. Messanordnung (8), umfassend eine Messeinheit (1), die zur Erfassung eines ortsaufgelösten Messergebnisses in einem ersten Raumwinkelbereich (R1) eingerichtet ist, eine Umwandlungs- und Datenverarbeitungseinheit (2), die zur Gewinnung eines Falschfarbenbildes aus dem ortsaufgelösten Messergebnisses eingerichtet ist, und eine Darstellungseinheit (3) zur Ausgabe des Falschfarbenbildes, wobei die Messanordnung (8) eine thermografische Kamera aufweist, mit welcher mittels einer nicht sichtbaren Wärmestrahlung eine Oberflächentemperatur des Objekts (16) messbar ist, **dadurch gekennzeichnet, dass** die Darstellungseinheit (3) zur Projektion des Falschfarbenbildes in einen zweiten Raumwinkelbereich (R3) eingerichtet ist, welcher zweiter Raumwinkelbereich (R3) mit dem ersten Raumwinkelbereich (R1) überlappt oder übereinstimmt.

12. Messanordnung (8) nach Anspruch 11, **dadurch gekennzeichnet, dass** eine Kameraeinheit (4) zur Aufnahme im sichtbaren Wellenlängenbereich ausgebildet ist.

13. Messanordnung (8) nach Anspruch 11 oder 12, **dadurch gekennzeichnet, dass** die Messeinheit (1) und die Darstellungseinheit (3), insbesondere mit dem ersten Raumwinkelbereich (R1) und dem zweiten Raumwinkelbereich (R3), derart zueinander ausgerichtet oder ausrichtbar sind, dass eine Parallaxe minimiert ist.

14. Messanordnung (8) nach einem der Ansprüche 11 bis 13, **dadurch gekennzeichnet, dass** die Darstellungseinheit (3) einen Projektor oder Beamer, insbesondere einen Laserprojektor oder Laserbeamer, aufweist.

15. Messanordnung (8) nach einem der Ansprüche 11 bis 14, **dadurch gekennzeichnet, dass** eine Strahlungsquelle (6) vorgesehen ist, welche zur Aktivierung einer physikalischen Eigenschaft eines angestrahlten Objektes (16) eingerichtet ist, wobei die Messeinheit (1) sensitiv auf die physikalische Eigenschaft ist.

16. Messanordnung (8) nach einem der Ansprüche 11 bis 15, **dadurch gekennzeichnet, dass** die Messeinheit (1), die Darstellungseinheit (3), eine Strahlungsquelle (6), die Umwandlungs- und Datenverarbeitungseinheit (2), eine Kameraeinheit (4) und/oder eine Displayeinheit (5) in einem gemeinsamen Gehäuse (13) angeordnet sind, insbesondere als handgehaltenes Gerät.

## Claims

1. Method for visualizing spatially resolved measurement results, wherein a measuring unit (1) establishes a spatially resolved measurement result of an object (16) and a false-color image is obtained from the spatially resolved measurement result, wherein, in order to generate the spatially resolved measurement result, a surface temperature of the object (16) is measured contactlessly by means of invisible thermal radiation using a thermographic camera, **characterized in that** the false-color image is projected onto the object (16) by a representation unit (3).

2. Method according to Claim 1, **characterized in that** the false-color image is updated continuously or repeatedly.

3. Method according to Claim 1 or 2, **characterized in that** the projection is carried out simultaneously with the establishment of an updated spatially resolved measurement result.

4. Method according to one of Claims 1 to 3, **characterized in that** image regions of the false-color image, which are assigned to an object region of the object (16) in each case via the spatially resolved measurement result, are projected onto the respective object regions.

5. Method according to one of Claims 1 to 4, **characterized in that** the representation unit (3) is used to project additional information onto the object (16).

6. Method according to one of Claims 1 to 5, **characterized in that** a color and/or brightness encoding is used for the false-color image, which encoding takes account of the color and/or brightness properties of the object (16).

7. Method according to one of Claims 1 to 6, **characterized in that** an image of the object (16) is additionally recorded in the visual wavelength range.

8. Method according to one of Claims 1 to 7, **characterized in that** the object is illuminated uniformly, preferably by the representation unit (3), for the purpose of capturing the color and/or brightness properties.

9. Method according to one of Claims 1 to 8, **characterized in that** a radiation source (6) is used to activate the property of the object (16) not immediately visible to the human eye.

10. Method according to one of Claims 1 to 9, **characterized in that** the projection is carried out by means of laser beams.

11. Measuring arrangement (8), comprising a measuring unit (1), which is configured to capture a spatially resolved measurement result in a first solid angle region (R1), a conversion and data-processing unit (2), which is configured to obtain a false-color image from the spatially resolved measurement result, and a representation unit (3) for outputting the false-color image, wherein the measuring arrangement (8) has a thermographic camera, by means of which a surface temperature of the object (16) can be measured by means of invisible thermal radiation, **characterized in that** the representation unit (3) is configured to project the false-color image into a second solid angle region (R3), which second solid angle region (R3) overlaps with or corresponds to the first solid angle region (R1).

12. Measuring arrangement (8) according to Claim 11, **characterized in that** a camera unit (4) is embodied to record in the visual wavelength range.

13. Measuring arrangement (8) according to Claim 11 or 12, **characterized in that** the measuring unit (1) and the representation unit (3), in particular with the first solid angle region (R1) and the second solid angle region (R3), are or can be aligned with respect to one another such that a parallax is minimized.

14. Measuring arrangement (8) according to one of Claims 11 to 13, **characterized in that** the representation unit (3) has a projector or a beamer, more particularly a laser projector or a laser beamer.

15. Measuring arrangement (8) according to one of Claims 11 to 14, **characterized in that** provision is made for a radiation source (6) which is configured to activate a physical property of an irradiated object (16), wherein the measuring unit (1) is sensitive to the physical property.

16. Measuring arrangement (8) according to one of Claims 11 to 15, **characterized in that** the measuring unit (1), the representation unit (3), a radiation source (6), the conversion and data-processing unit (2), a camera unit (4) and/or a display unit (5) are arranged in a common housing (13), more particularly as a handheld instrument.

## Revendications

1. Procédé de visualisation de résultats de mesure de localisation, dans lequel
un résultat de mesure de localisation d'un objet (16) est formé à l'aide d'une unité de mesure (1) et une image en fausses couleurs est obtenue à partir du résultat de mesure de localisation,
la température de surface de l'objet (16) étant mesurée sans contact par une caméra thermographique à l'aide d'un rayonnement thermique non visible, pour former le résultat de mesure de localisation, **caractérisé en ce que**
l'image en fausses couleurs est projetée sur l'objet (16) à l'aide d'une unité de représentation (3).

2. Procédé selon la revendication 1, **caractérisé en ce qu'**une image en fausses couleurs est actualisée en permanence ou à répétition.

3. Procédé selon les revendications 1 ou 2, **caractérisé en ce que** la projection est réalisée en même temps que la formation d'un résultat actualisé de mesure de localisation.

4. Procédé selon l'une des revendications 1 à 3, **caractérisé en ce que** les parties de l'image en fausses couleurs qui sont associées par l'intermédiaire du résultat de mesure de localisation à des parties respectives de l'objet (16) sont projetées sur les parties respectives de l'objet.

5. Procédé selon l'une des revendications 1 à 4, **caractérisé en ce que** des informations supplémentaires sont projetées sur l'objet (16) à l'aide de l'unité de représentation (3).

6. Procédé selon l'une des revendications 1 à 5, **caractérisé en ce qu'**un codage de couleurs et/ou de luminosité qui tient compte des propriétés de couleurs et/ou de luminosité de l'objet (16) est utilisé pour former l'image en fausses couleurs.

7. Procédé selon l'une des revendications 1 à 6, **caractérisé en ce qu'**une représentation de l'objet (16) dans la plage des longueurs d'onde visibles est de plus enregistrée.

8. Procédé selon l'une des revendications 1 à 7, **caractérisé en ce que** pour saisir les propriétés de couleurs et/ou de luminosité, l'objet est éclairé uniformément, de préférence à l'aide de l'unité de représentation (3).

9. Procédé selon l'une des revendications 1 à 8, **caractérisé en ce qu'**il utilise une source de rayonnement (6) qui active la propriété de l'objet (16) non visible directement à l'oeil humain.

10. Procédé selon l'une des revendications 1 à 9, **caractérisé en ce que** la projection est réalisée au moyen de faisceaux laser.

11. Ensemble de mesure (8) comprenant
une unité de mesure (1) conçue pour saisir un résultat de mesure de localisation dans une première plage angulaire spatiale (R1),
une unité (2) de conversion et de traitement de données conçue pour former une image en fausses couleurs à partir des résultats de mesure de localisation et
une unité de représentation (3) qui délivre l'image en fausses couleurs,
l'ensemble de mesure (8) présentant une caméra thermographique par laquelle la température de surface de l'objet (16) peut être mesurée à l'aide d'un rayonnement thermique non visible,
**caractérisé en ce que**
l'unité de représentation (3) est conçue pour projeter l'image en fausses couleurs dans une deuxième plage angulaire spatiale (R3), cette plage angulaire spatiale (R3) recouvrant la première plage angulaire spatiale (R1) ou lui correspondant.

12. Ensemble de mesure (8) selon la revendication 11, **caractérisé en ce qu'**une unité de caméra (4) est configurée pour enregistrer dans la plage des longueurs d'onde visibles.

13. Ensemble de mesure (8) selon les revendications 11 ou 12, **caractérisé en ce que** l'unité de mesure (1) et l'unité de représentation (3), en particulier avec la première plage angulaire spatiale (R1) et la deuxième plage angulaire spatiale (R3), sont orientées ou peuvent être orientées l'une par rapport à l'autre de manière à minimiser la parallaxe.

14. Ensemble de mesure (8) selon l'une des revendications 11 à 13, **caractérisé en ce que** l'unité de représentation (3) présente un projecteur ou moyen de formation d'un faisceau, en particulier un projecteur lasser ou un moyen de formation de faisceau laser.

15. Ensemble de mesure (8) selon l'une des revendications 11 à 14, caractérisé en de qu'il présente une source de rayonnement (6) conçue pour activer une propriété physique d'un objet (16) irradié, l'unité de mesure (1) étant sensible à la propriété physique.

16. Ensemble de mesure (8) selon l'une des revendications 11 à 15, **caractérisé en ce que** l'unité de mesure (1), l'unité de représentation (3), une source de rayonnement (6), l'unité (2) de conversion et de traitement de données, une unité de caméra (4) et/ou une unité d'affichage (5) sont disposées dans un boîtier (13) commun configuré en particulier comme appareil portable.
